# EUROPEAN PATENT SPECIFICATION

(11) **EP 3 274 376 B1**
(45) Date of publication and mention of the grant of the patent: **20.06.2018**
(21) Application number: 16714319.7
(22) Date of filing: 23.03.2016
(51) Int. Cl.: C08F 2/44, C08F 2/34

(54) **POLYMERIZATION PROCESS IN THE PRESENCE OF ANTISTATIC AGENT**
POLYMERISIERUNGSVERFAHREN IN GEGENWART EINES ANTISTATISCHEN WIRKSTOFFS
PROCÉDÉ DE POLYMÉRISATION EN PRÉSENCE D'UN AGENT ANTISTATIQUE

(30) Priority: 26.03.2015 EP 15161098; 15.12.2015 EP 15200102
(43) Date of publication of application: 31.01.2018
(73) Proprietor: Basell Polyolefine GmbH, 50389 Wesseling (DE)
(72) Inventor: MANNEBACH, Gerd, 56294 Münstermaifeld (DE); MARCZINKE, Bernd Lothar, 67354 Roemerberg (DE); MEIER, Gerhardus, 60320 Frankfurt (DE); SCHUELLER, Ulf, 64331 Weiterstadt (DE); MIHAN, Shahram, 65812 Bad Soden (DE); MAUS, Andreas, 60431 Frankfurt (DE); BAITA, Pietro, 44122 Ferrara (IT); DI DIEGO, Maria, 44122 Ferrara (IT); MARTURANO, Lorella, 44122 Ferrara (IT)
(74) Representative: Seelert, Stefan
(86) International application number: PCT/EP2016/056340
(87) International publication number: WO 2016/150997

(56) References cited:
- EP-A1- 0 107 127
- EP-A1- 2 813 520
- EP-A2- 0 229 368

## Description

### FIELD OF THE INVENTION

The present disclosure relates to a process for the preparation of polyolefins by polymerizing olefins at temperatures of from 20 to 200 °C and pressures of from 0.1 to 20 MPa in the presence of a polymerization catalyst and an antistatic agent in a polymerization reactor.

### BACKGROUND OF THE INVENTION

Antistatic agents are commonly used in the continuous polymerization of olefins to avoid electrostatic charging in order to reduce wall sheeting and formation of polymer agglomerates in the polymerization reactor. In the context of olefin polymerization, antistatic agents are also called antifouling agents, activity inhibitors, productivity inhibitors or kinetic modifiers. Usually the antistatic agents comprise antistatically acting compounds which have polar functional groups such as acid or ester groups, amine or amide groups or hydroxyl or ether groups. Examples of antistatically acting compounds are polysulfone copolymers, polymeric polyamines, polyalcohols, hydroxyesters of polyalcohols, salts of alkylarylsulfonic acids, polysiloxanes, alkoxyamines, polyglycol ethers, etc.

US 5,410,002, for example, discloses a polymerization process in which antistatic compounds are used to eliminate or reduce the build-up of polymer particles on the walls of a gas-phase polymerization reactor. These antistatic compounds are capable of selectively inhibiting the polymerization on polymer particles smaller than 850 µm, the latter being responsible for fouling problems and polymer sheeting. Those antistatic/anti-fouling compounds are preferably selected among alklydiethanolamines.

WO 2011/029735 A1 refers to a process for the gas-phase polymerization of α-olefins in the presence of a polymerization catalyst, where the process comprises a polymerization step in which the polymer particles flow downward in densified form under the action of gravity so as to form a densified polymer bed and an anti-fouling agent is metered in this polymerization step by at least 2 feeding lines placed at different heights of the densified polymer bed.

WO 2014/064059 A1 describes a process for preparing a polyolefin polymer by gas-phase polymerization at temperatures in a polymerization reactor cascade which is carried out in the presence of a combination of a hydroxyester having at least one free hydroxyl group, and an ethoxylated alkylamine or ethoxylated alkylamide comprising an alkyl group of from 2 to 20 carbon atoms.

Antistatic agents used in the continuous polymerization of olefins often not only have the desired antistatic effect but also negatively impact the activity of virtually all olefin polymerization catalysts. Furthermore, their efficiency is limited; that means even if these antistatic agents are added to the polymerization, there are still sometimes issues regarding sheeting and lump formation because of electrostatic charging for certain products, especially for preparing polyolefins with relatively high molecular weight. Furthermore, a long-term reliable operation of the polymerization reactors should be ensured.

Thus, it was the object of the present disclosure to overcome the disadvantages of the prior art and to find a polymerization process which not only prevents the formation of wall sheeting and polymer agglomerates in the polymerization reactors but also provides a good operability of the polymerization process.

### SUMMARY OF THE INVENTION

The present disclosure provides a process for the preparation of polyolefins by polymerizing olefins at temperatures of from 20 to 200 °C and pressures of from 0.1 to 20 MPa in the presence of a polymerization catalyst in a polymerization reactor, wherein the polymerization is carried out in the presence of an antistatic agent comprising an alkylene oxide derived polymer comprising in average from 10 to 200 repeating units --(CH₂-CHR-O)- with R being hydrogen or an alkyl group having from 1 to 6 carbon atoms, wherein the alkylene oxide derived polymer is a random copolymer of ethylene oxide and other alkylene oxides and a ratio n : m of repeating units --(CH₂-CH₂-O)- derived from ethylene oxide to repeating units --(CH₂-CHR'-O)- derived from the other alkylene oxides with R' being an alkyl group having from 1 to 6 carbon atoms is in the range of from 6 : 1 to 1 : 1, and all end groups of the alkylene oxide derived polymer are -OH groups.

In some embodiments, the ratio n : m is in the range of from 4 : 1 to 2 : 1.

In some embodiments, the random copolymer the alkylene oxide derived polymer is a linear polymer of general formula (I)

HO-(CH₂-CH₂-O)ₙ-(CH₂-CHR'-O)ₘ-H (I)

wherein R' is a alkyl group having from 1 to 6 carbon atoms and n and m denote the average number of repeating units and n is in a range of from 10 to 180 and m is in a range of from 2 to 120.

In some embodiments, the random copolymer is a random copolymer of ethylene oxide and propylene oxide.

In some embodiments, the ethylene oxide/propylene oxide polymer is a linear ethylene oxide/propylene oxide copolymer of general formula (II)

HO-(CH₂-CH₂-O)ₙ-(CH₂-CH(CH₃)-O)ₘ-H (II)

wherein n is in a range of from 10 to 180 and m is in a range of from 2 to 120.

In some embodiments, the polymerization is carried out in a polymerization reactor cascade comprising a fluidized-bed reactor and a multizone circulating reactor, in which multizone circulating reactor the growing polymer particles flow upward through a first polymerization zone under fast fluidization or transport conditions, leave said first polymerization zone and enter a second polymerization zone through which the particles flow downward under the action of gravity, leave said downcomer and are reintroduced into the riser, thus establishing a circulation of polymer,

In some embodiments, the fluidized-bed reactor is arranged upstream of the multizone circulating reactor.

In some embodiments, a lower molecular weight polyolefin polymer component is obtained in the fluidized-bed reactor and a higher molecular weight polyolefin polymer component is obtained in the multizone circulating reactor.

In some embodiments, the polyolefin polymer is a multimodal polyolefin polymer.

In some embodiments, the polyolefin polymer is a polyethylene prepared by homopolymerizing ethylene or copolymerizing ethylene and up to 20 wt.% of C₃-C₈-1-alkenes.

In some embodiments, the polyethylene has a MFR_{21.6} according to DIN EN ISO 1133:2005 at a temperature of 190°C under a load of 21.6 kg in the range of from 0.5 g/10 min to 350 g/10 min.

In some embodiments, the polyethylene has a density in the range of from 0.935 g/cm³ to 0.970 g/cm³.

In some embodiments, the polyethylene is prepared in a polymerization reactor cascade, in which the fluidized-bed reactor is arranged upstream of the multizone circulating reactor, and an ethylene homopolymer or ethylene copolymer, which has a MFR_{21.6} according to DIN EN ISO 1133:2005 at a temperature of 190°C under a load of 2.16 kg in the range of from 0.1 g/10 min to 300 g/10 min, is produced in the fluidized-bed reactor.

In some embodiments, the polymerization catalyst is a Ziegler catalyst, a Ziegler-Natta catalyst, a Phillips catalyst, a single-site catalyst or a mixture of catalysts comprising at least one single-site catalyst.

### BRIEF DESCRIPTION OF THE DRAWINGS

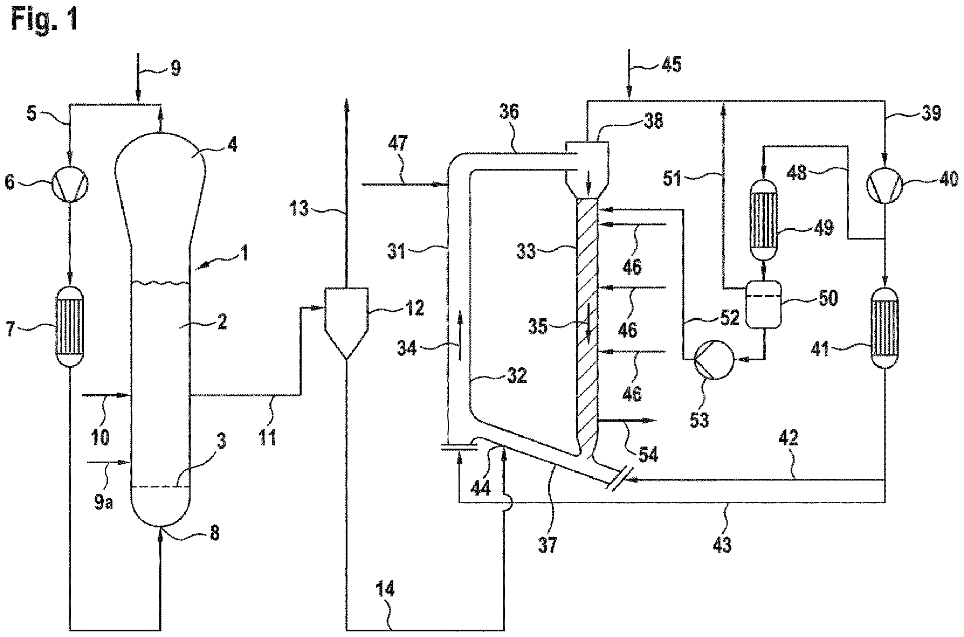

Figure 1 shows schematically a set-up of a polymerization reactor cascade comprising a fluidized-bed reactor and a multizone circulating reactor suitable for the polymerization process of the present disclosure without however restricting the invention to the embodiments described therein.

### DETAILED DESCRIPTION OF THE INVENTION

The present disclosure provides a process for the polymerization of olefins and especially for the polymerization of 1-olefins, i.e. hydrocarbons having terminal double bonds, without being restricted thereto. Suitable monomers can be functionalized olefinically unsaturated compounds such as ester or amide derivatives of acrylic or methacrylic acid, for example acrylates, methacrylates, or acrylonitrile. Preference is given to nonpolar olefinic compounds, including aryl-substituted 1-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process is in particular suitable in the homopolymerization or copolymerization of ethylene or propylene and is especially preferred for the homopolymerization or copolymerization of ethylene. Preferred comonomers in propylene polymerization are up to 40 wt.% of ethylene and/or 1-butene, preferably from 0.5 wt.% to 35 wt.% of ethylene and/or 1-butene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to a process in which ethylene is copolymerized with from 0.1 wt.% to 12 wt.% of 1-hexene and/or 1-butene.

The process of the present disclosure is especially suitable for the preparation of polyethylenes having a MFR_{21.6} at a temperature of 190 °C under a load of 21.6 kg, determined according to DIN EN ISO 1133:2005, condition G, of from 0.5 to 300 g/10 min, more preferably of from 1 to 100 g/10 min, even more preferably of from 1.2 to 100 g/10 min and especially of from 1.5 to 50 g/10 min.

The polymerization of olefins can be carried out using all customary olefin polymerization catalysts. That means the polymerization can be carried out using Phillips catalysts based on chromium oxide, using titanium-based Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts for the process of the present disclosure are catalysts of the Phillips type, which are preferably prepared by applying a chromium compound to an inorganic support and subsequently calcinating this at temperatures in the range from 350 to 950°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during calcination. As supports for Phillips catalysts, which are also known to those skilled in the art, mention may be made of aluminum oxide, silicon dioxide (silica gel), titanium dioxide, zirconium dioxide or their mixed oxides or cogels, or aluminum phosphate. Further suitable support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. The activated chromium catalysts can subsequently be prepolymerized or prereduced. The prereduction is usually carried out by means of cobalt or else by means of hydrogen at 250 to 500 °C, preferably at 300 to 400 °C, in an activator.

Preferred catalysts for the process of the present disclosure are also single-site catalysts. Particularly suitable are those comprising bulky sigma- or pi-bonded organic ligands, e.g. catalysts based on mono-Cp complexes, catalysts based on bis-Cp complexes, which are commonly designated as metallocene catalysts, or catalysts based on late transition metal complexes, in particular iron-bisimine complexes. Further preferred catalysts are mixtures of two or more single-site catalysts or mixtures of different types of catalysts comprising at least one single-site catalyst.

Preferred catalysts are further catalysts of the Ziegler type, preferably comprising a compound of titanium or vanadium, a compound of magnesium and optionally an electron donor compound and/or a particulate inorganic oxide as support.

As titanium compounds, use is generally made of the halides or alkoxides of trivalent or tetravalent titanium, with titanium alkoxy halogen compounds or mixtures of various titanium compounds also being possible. Examples of suitable titanium compounds are TiBr₃, TiBr₄, TiCl₃, TiCl₄, Ti(OCH₃)Cl₃, Ti(OC₂H₅)Cl₃, Ti(O-i-C₃H₇)Cl₃, Ti(O-n-C₄H₉)Cₗ₃, Ti(OC₂H₅)Br₃, Ti(O-n-C₄H₉)Br₃, Ti(OCH₃)₂Cl₂, Ti(OC₂H₅)₂Cₗ₂, Ti(O-n-C₄H₉)Cₗ₂, Ti(OC₂H₅)₂Br₂, Ti(OCH₃)₃Cl, Ti(OC₂H₅)₃Cl, Ti(O-n-C₄H₉)₃Cl, Ti(OC₂H₅)₃Br, Ti(OCH₃)₄, Ti(OC₂H₅)₄ or Ti(O-n-C₄H₉)₄. Preference is given to using titanium compounds which comprise chlorine as the halogen. Preference is likewise given to titanium halides which comprise only halogen in addition to titanium and among these especially titanium chlorides and in particular titanium tetrachloride. Among the vanadium compounds, particular mention may be made of the vanadium halides, the vanadium oxyhalides, the vanadium alkoxides and the vanadium acetylacetonates. Preference is given to vanadium compounds in the oxidation states 3 to 5.

In the production of the solid component, at least one compound of magnesium is preferably additionally used. Suitable compounds of this type are halogen-comprising magnesium compounds such as magnesium halides and in particular the chlorides or bromides and magnesium compounds from which the magnesium halides can be obtained in a customary way, e.g. by reaction with halogenating agents. For the present purposes, halogens are chlorine, bromine, iodine or fluorine or mixtures of two or more halogens, with preference being given to chlorine or bromine and in particular chlorine.

Possible halogen-comprising magnesium compounds are in particular magnesium chlorides or magnesium bromides. Magnesium compounds from which the halides can be obtained are, for example, magnesium alkyls, magnesium aryls, magnesium alkoxy compounds or magnesium aryloxy compounds or Grignard compounds. Suitable halogenating agents are, for example, halogens, hydrogen halides, SiCl₄ or CCl₄ and preferably chlorine or hydrogen chloride.

Examples of suitable, halogen-free compounds of magnesium are diethylmagnesium, di-n-propylmagnesium, diisopropylmagnesium, di-n-butylmagnesium, di-sec-butylmagnesium, di-tert-butylmagnesium, diamylmagnesium, n-butylethylmagnesium, n-butyl-sec-butylmagnesium, n-butyloctylmagnesium, diphenylmagnesium, diethoxymagnesium, di-n-propyloxymagnesium, diisopropyloxymagnesium, di-n-butyloxymagnesium, di-sec-butyloxymagnesium, di-tert-butyloxymagnesium, diamyloxymagnesium, n-butyloxyethoxymagnesium, n-butyloxy-sec-butyloxymagnesium, n-butyloxyoctyloxymagnesium and diphenoxymagnesium. Among these, preference is given to using n-butylethylmagnesium or n-butyloctylmagnesium.

Examples of Grignard compounds are methylmagnesium chloride, ethylmagnesium chloride, ethylmagnesium bromide, ethylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, hexylmagnesium chloride, octylmagnesium chloride, amyl-magnesium chloride, isoamylmagnesium chloride, phenylmagnesium chloride and phenylmagnesium bromide.

As magnesium compounds for producing the particulate solids, preference is given to using, apart from magnesium dichloride or magnesium dibromide, the di(C₁-C₁₀-alkyl)magnesium compounds. Preferably, the Ziegler-Natta catalyst comprises a transition metal selected from titanium, zirconium, vanadium, chromium.

Suitable electron donor compounds for preparing Ziegler type catalysts are for example alcohols, glycols, esters, ketones, amines, amides, nitriles, alkoxysilanes and aliphatic ethers. These electron donor compounds can be used alone or in mixtures with other electron donor compounds.

Preferred alcohols are those of formula R¹OH in which the R¹ group is a C₁-C₂₀ hydrocarbon group. Preferably, R¹ is a C₁-C₁₀ alkyl group. Specific examples are methanol, ethanol, iso-propanol and n-butanol. Preferred glycols are those having a total number of carbon atoms lower than 50. Among them particularly preferred are the 1,2 or 1,3 glycols having a total number of carbon atoms lower than 25. Specific examples are ethylenglycol, 1,2-propylenglycol and 1,3-propylenglycol. Preferred esters are the alkyl esters of C₁-C₂₀ aliphatic carboxylic acids and in particular C₁-C₈ alkyl esters of aliphatic mono carboxylic acids such as ethylacetate, methyl-formiate, ethylformiate, methylacetate, propylacetate, i-propylacetate, n-butylacetate, i-butylacetate. Preferred amines are those of formula NR²₃ in which the R² groups are, independently, hydrogen or a C₁-C₂₀ hydrocarbon group with the proviso that the R² groups are not simultaneously hydrogen. Preferably, R² is a C₁-C₁₀ alkyl group. Specific examples are diethylamine, diisopropylamine and triethylamine. Preferred amides are those of formula R³CONR⁴₂ in which R³ and R⁴ are, independently, hydrogen or a C₁-C₂₀ hydrocarbon group. Specific examples are formamide and acetamide. Preferred nitriles are those of formula R¹CN where R¹ has the same meaning given above. A specific example is acetonitrile. Preferred alkoxysilanes are those of formula R⁵ₐR⁶_{b}Si(OR⁷)_{c}, where a and b are integer from 0 to 2, c is an integer from 1 to 4 and the sum (a+b+c) is 4; R⁵, R⁶, and R⁷, are alkyl, cycloalkyl or aryl radicals with 1-18 carbon atoms optionally containing heteroatoms. Particularly preferred are the silicon compounds in which a is 0 or 1, c is 2 or 3, R⁶ is an alkyl or cycloalkyl group, optionally containing heteroatoms, and R⁷ is methyl. Examples of such preferred silicon compounds are methyltrimethoxysilane, dimethyldimethoxysilane, trimethylmethoxysilane and t-butyltrimethoxysilane.

Preferred electron donor compounds are selected from the group consisting of amides, esters, and alkoxysilanes.

Catalysts of the Ziegler type are usually polymerized in the presence of a cocatalyst. Preferred cocatalysts are organometallic compounds of metals of groups 1, 2, 12, 13 or 14 of the Periodic Table of Elements, in particular organometallic compounds of metals of group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, preferably trialkylaluminum compounds. Preferably, the aluminum alkyls comprise, for example, trimethyl-aluminum, triethylaluminum, tri-isobutylaluminum, tri-n-hexylaluminum and the like.

The obtained polyolefin particles have a more or less regular morphology and size, depending on the catalyst morphology and size, and on polymerization conditions. Depending on the catalyst used, the polyolefin particles usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 500 to about 3000 µm.

The process can be carried out using all industrially known low-pressure polymerization methods at temperatures in the range from 20 to 200 °C, preferably from 30 to 150 °C and particularly preferably from 40 to 130 °C, and under pressures of from 0.1 to 20 MPa and particularly preferably from 0.3 to 5 MPa. The polymerization can be carried out batchwise or preferably continuously in one or more stages. Solution processes, suspension processes, and gas-phase processes are all possible. Processes of this type are generally known to those skilled in the art. Among the polymerization processes mentioned, gas-phase polymerization, in particular in gas-phase fluidized-bed reactors or multizone circulating reactors, and suspension polymerization, in particular in loop reactors or stirred tank reactors, are preferred.

In a preferred embodiment of the present disclosure, the polymerization process is a suspension polymerization in a suspension medium, preferably in an inert hydrocarbon such as isobutane or mixtures of hydrocarbons or else in the monomers themselves. Suspension polymerization temperatures are usually in the range from 20 to 115 °C, and the pressure is in the range of from 0.1 to 10 MPa. The solids content of the suspension is generally in the range of from 10 to 80 wt.%. The polymerization can be carried out both batchwise, e.g. in stirred autoclaves, and continuously, e.g. in tubular reactors, preferably in loop reactors. In particular, it can be carried out by the Phillips PF process as described in US 3,242,150 and US 3,248,179.

Suitable suspension media are all media which are generally known for use in suspension reactors. The suspension medium should be inert and be liquid or supercritical under the reaction conditions and should have a boiling point which is significantly different from those of the monomers and comonomers used in order to make it possible for these starting materials to be recovered from the product mixture by distillation. Customary suspension media are saturated hydrocarbons having from 4 to 12 carbon atoms, for example isobutane, butane, propane, isopentane, pentane and hexane, or a mixture of these, which is also known as diesel oil.

In a preferred suspension polymerization process, the polymerization takes place in a cascade of two or preferably three or four stirred vessels. The molecular weight of the polymer fraction prepared in each of the reactors is preferably set by addition of hydrogen to the reaction mixture. The polymerization process is preferably carried out with the highest hydrogen concentration and the lowest comonomer concentration, based on the amount of monomer, being set in the first reactor. In the subsequent further reactors, the hydrogen concentration is gradually reduced and the comonomer concentration is altered, in each case once again based on the amount of monomer. Ethylene or propylene is preferably used as monomer and a 1-olefin having from 4 to 10 carbon atoms is preferably used as comonomer.

A further preferred suspension polymerization process is suspension polymerization in loop reactors, where the polymerization mixture is pumped continuously through a cyclic reactor tube. As a result of the pumped circulation, continual mixing of the reaction mixture is achieved and the catalyst introduced and the monomers fed in are distributed in the reaction mixture. Furthermore, the pumped circulation prevents sedimentation of the suspended polymer. The removal of the heat of reaction via the reactor wall is also promoted by the pumped circulation. In general, these reactors consist essentially of a cyclic reactor tube having one or more ascending legs and one or more descending legs which are enclosed by cooling jackets for removal of the heat of reaction and also horizontal tube sections which connect the vertical legs. The impeller pump, the catalyst feed facilities and the monomer feed facilities and also the discharge facility, thus normally the settling legs, are usually installed in the lower tube section. However, the reactor can also have more than two vertical tube sections, so that a meandering arrangement is obtained.

Preferably, the suspension polymerization is carried out in the loop reactor at an ethylene concentration of at least 5 mole percent, preferably 10 mole percent, based on the suspension medium. In this context, suspension medium does not mean the fed suspension medium such as isobutane alone but rather the mixture of this fed suspension medium with the monomers dissolved therein. The ethylene concentration can easily be determined by gas-chromatographic analysis of the suspension medium.

In an especially preferred embodiment of the present disclosure, the polymerization process is carried out as gas-phase polymerization, i.e. by a process in which the solid polymers are obtained from a gas-phase of the monomer or the monomers. Such gas-phase polymerizations are usually carried out at pressures of from 0.1 to 20 MPa, preferably from 0.5 to 10 MPa and in particular from 1.0 to 5 MPa and polymerization temperatures from 40 to 150°C and preferably from 65 to 125°C.

Suitable gas-phase polymerization reactors are horizontally or vertically stirred reactor, fluidized bed gas-phase reactors or multizone circulating reactors and preferably fluidized bed gas-phase reactors or multizone circulating reactors.

Fluidized-bed polymerization reactors are reactors in which the polymerization takes place in a bed of polymer particles which is maintained in a fluidized state by feeding in gas at the lower end of a reactor, usually below a gas distribution grid having the function of dispensing the gas flow, and taking off the gas again at its upper end. The reactor gas is then returned to the lower end to the reactor via a recycle line equipped with a compressor and a heat exchanger. The circulated reactor gas is usually a mixture of the olefins to be polymerized, inert gases such as nitrogen and/or lower alkanes such as ethane, propane, butane, pentane or hexane and optionally a molecular weight regulator such as hydrogen. The use of nitrogen or propane as inert gas, if appropriate in combination with further lower alkanes, is preferred. The velocity of the reactor gas has to be sufficiently high firstly to fluidize the mixed bed of finely divided polymer present in the tube serving as polymerization zone and secondly to remove the heat of polymerization effectively. The polymerization can also be carried out in a condensed or super-condensed mode, in which part of the circulating reaction gas is cooled to below the dew point and returned to the reactor separately as a liquid and a gas-phase or together as a two-phase mixture in order to make additional use of the enthalpy of vaporization for cooling the reaction gas.

Multizone circulating reactors are gas-phase reactors in which two polymerization zones are linked to one another and the polymer is passed alternately a plurality of times through these two zones. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, preferably in the upper part of the downcomer. The barrier fluid should have a suitable composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore it is also possible to introduce make-up monomers, comonomers, molecular weight regulator such as hydrogen and/or inert fluids at any point of the downcomer, preferably below the barrier feeding point. Thus, it is also easily possible to create varying monomer, comonomer and hydrogen concentrations along the downcomer resulting in a further differentiation of the polymerization conditions.

The gas-phase polymerization processes according to the present disclosure are preferably carried out in the presence of a C₃-C₅ alkane as polymerization diluent and more preferably in the presence of propane, especially in the case of homopolymerization or copolymerization of ethylene.

The different or else identical polymerization processes can also, if desired, be connected in series and thus form a polymerization cascade. A parallel arrangement of reactors using two or more different or identical processes is also possible.

In a particularly preferred embodiment of the present disclosure, the polymerization of olefins is carried out in a reactor cascade of two or more gas-phase reactors. More preferably, the polymerization of olefins is carried out in a reactor cascade comprising a fluidized-bed reactor and a multizone circulating reactor. Preferably the fluidized-bed reactor is arranged upstream of the multizone circulating reactor. Such a reactor cascade of gas-phase reactors may also further comprise additional polymerization reactors. These additional reactors can be any kind of low-pressure polymerization reactors such as gas-phase reactors or suspension reactors and may also include a pre-polymerization stage.

Figure 1 shows schematically a set-up of a preferred polymerization reactor cascade comprising a fluidized-bed reactor and a multizone circulating reactor for carrying out the process of the present disclosure.

The first gas-phase reactor, fluidized-bed reactor (1), comprises a fluidized bed (2) of polyolefin particles, a gas distribution grid (3) and a velocity reduction zone (4). The velocity reduction zone (4) is generally of increased diameter compared to the diameter of the fluidized-bed portion of the reactor. The polyolefin bed is kept in a fluidization state by an upwardly flow of gas fed through the gas distribution grid (3) placed at the bottom portion of the reactor (1). The gaseous stream of the reaction gas leaving the top of the velocity reduction zone (4) via recycle line (5) is compressed by compressor (6), transferred to a heat exchanger (7), in which the stream is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, also inert condensable gases, such as alkanes, as well as inert non-condensable gases, such as nitrogen. Make-up monomers, molecular weight regulators, and optional inert gases or process additives can be fed into the reactor (1) at various positions, for example via one or more lines (9) into recycle line (5) upstream of the compressor (6) or via line (9a) to the polymer bed within fluidized-bed reactor (1); this non-limiting the scope of the disclosure. Generally, the catalyst is fed into the reactor (1) via a line (10) that is preferably placed in the lower part of the fluidized bed (2).

The polyolefin particles obtained in fluidized-bed reactor (1) are discontinuously discharged via line (11) and fed to a solid/gas separator (12) in order to avoid that the gaseous mixture coming from fluidized-bed reactor (1) enters the second gas-phase reactor. The gas leaving solid/gas separator (12) exits the reactor via line (13) as off-gas while the separated polyolefin particles are fed via line (14) to the second gas-phase reactor.

The second gas-phase reactor is a multizone circulating gas-phase reactor (31) with two reaction zones, riser (32) and downcomer (33), which are repeatedly passed by the polyolefin particles. Within riser (32), the polyolefin particles flow upward under fast fluidization conditions along the direction of arrow (34). Within downcomer (33) the polyolefin particles flow downward under the action of gravity along the direction of arrow (35). The riser (32) and the downcomer (33) are appropriately interconnected by the interconnection bends (36) and (37).

After flowing through the riser (32), the polyolefin particles and the gaseous mixture leave the riser (32) and are conveyed to a solid/gas separation zone (38). This solid/gas separation can be effected by using conventional separation means such as, for example, a centrifugal separator like a cyclone. From the separation zone (38) the polyolefin particles enter the downcomer (33).

The gaseous mixture leaving the separation zone (38) is recycled to the riser (32) by means of a recycle line (39), equipped with a compressor (40) and a heat exchanger (41). Downstream of the heat exchanger (41) the recycle line (39) splits and the gaseous mixture is divided into two separated streams: line (42) conveys a part of the recycle gas into the interconnection bend (37), while the line (43) conveys another part the recycle gas to the bottom of the riser (32), so as to establish fast fluidization conditions therein.

The polyolefin particles coming from the first gas-phase reactor via line (14) enter the multizone circulating gas-phase reactor (31) at the interconnection bend (37) in position (44).

Make-up monomers, make-up comonomers, and optionally inert gases or process additives can be fed to the multizone circulating reactor (31) via one, two or more lines (45) or (46), suitably placed at any point of the gas recycle line (39) or the downcomer (33). A preferred route for feeding process additives such as antistatic agents is further feeding the additives via line (47).

A part of the gaseous mixture leaving the separation zone (38) exits recycle line (39) after the compressor (40) and is sent through line (48) to heat exchanger (49) where the mixture is cooled to a temperature at which the monomers and the optional inert gas are partially condensed. A separating vessel (50) is placed downstream the heat exchanger (49). The separated gaseous mixture is recirculated through line (51) to recycle line (39) and the separated liquid is fed to the downcomer (33) through line (52) by means of pump (53).

The polyolefin particles obtained in the multizone circulating reactor (31) are continuously discharged from the bottom part of downcomer (33) via discharge line (54).

The antistatic agent employed in the process of the present disclosure comprises an alkylene oxide derived polymer comprising in average from 10 to 200 repeating units -(CH₂-CHR-O)- with R being hydrogen or an alkyl group having from 1 to 6 carbon atoms, wherein the alkylene oxide derived polymer is a random copolymer of ethylene oxide and other alkylene oxides and the ratio n : m of repeating units -(CH₂-CH₂-O)- derived from ethylene oxide and repeating units -(CH₂-CHR'-O)- with R' being an alkyl group having from 1 to 6 carbon atoms derived from the other alkylene oxides is in the range of from 6 : 1 to 1 : 1, preferably in the range of from 5 : 1 to 1.5 : 1 and more preferably in the range of from 4 : 1 to 2 : 1. All end groups of the alkylene oxide derived polymer are -OH groups.

Preferably the ethylene oxide derived polymer is a linear polymer of general formula (I)

HO-(CH₂-CH₂-O)ₙ-(CH₂-CHR'-O)ₘ-H (I)

wherein R' is an alkyl group having from 1 to 6 carbon atoms, preferably an alkyl group having from 1 to 3 carbon atoms and more preferably methyl, and n and m denote the average number of repeating units and n is in a range of from 10 to 180, preferably from 20 to 100 and more preferably from 30 to 50 and m is in a range of from 2 to 120, preferably from 10 to 80 and more preferably from 10 to 40.

In a preferred embodiment of the present disclosure, the antistatic agent is a random copolymer of ethylene oxide and propylene oxide. Preferably the copolymer of ethylene oxide and propylene oxide is a linear ethylene oxide/propylene oxide copolymer of general formula (II)

HO-(CH₂-CH₂-O)ₙ-(CH₂-CH(CH₃)-O)ₘ-H (II)

wherein n is in a range of from 10 to 180, preferably from 20 to 100 and more preferably from 30 to 50 and m is in a range of from 2 to 120, preferably from 10 to 80 and more preferably from 10 to 40.

Alkylene oxide derived polymers suitable for the process of the present disclosure can be prepared by reacting ethylene oxide and the other alkylene oxides such as propylene oxide, with polyhydric alcohols like diols, e.g. ethylene glycol, triols, e.g. glycerol, or polyols such as e.g. pentaerythritol, where the reaction with diols resulting in linear polymers is preferred.

The antistatic agent of the present disclosure can be introduced into the reactor with the aid of all customary methods. The feeding can occur directly into the reactor or into a line leading to the reactor.

In a preferred embodiment of the disclosure, the amount of antistatic agent introduced into the polymerization reactor is from 1 to 500 ppm per weight, more preferably from 10 to 200 ppm per weight, and most preferably from 50 to 100 ppm per weight referring to the weight of the prepared polyolefin.

According to an especially preferred embodiment of the present disclosure, the polymerization is a gas-phase polymerization and the antistatic agent is introduced into the gas-phase polymerization reactor by feeding the antistatic agent to a part of the reactor where the density of solid polymer particles is at least 30 kg/m³, preferably at least 50 kg/m³, and more preferably at least 80 kg/m³. Preferred parts of gas-phase polymerization reactors, to which the antistatic agent may be fed, are, for instance, those parts which contain a stirred or fluidized bed of polymer particles. Other parts of gas-phase polymerization reactors, to which the antistatic agent can be fed according to this embodiment, are a riser or a downcomer of a multizone circulating reactor. Furthermore, if the gas-phase polymerization is preceded by a polymerization in suspension, it is further preferred to introduce the antistatic agent into a flash line or flash vessel into which the suspension medium is evaporated.

The antistatic agent is preferably introduced into the polymerization reactor by a stream of a liquid hydrocarbon. This stream for feeding the antistatic agent can be a monomer or comonomer stream, preferably this stream is a feed stream, also known as pick-up stream, of a liquid hydrocarbon, such as propane or propylene. Preferably, the weight ratio of antistatic agent to liquid hydrocarbon in the combined stream, which is introduced into the reactor, is less than 1 : 5, more preferably the weight ratio of antistatic agent to liquid hydrocarbon in the combined stream is in the range from 1 : 5000 to 1 : 10, even more preferably in the range from 1 : 2000 to 1 : 20, and most preferably in the range from 1 : 1000 to 1 : 50. Preferably, the combined feed stream comprising liquid hydrocarbon and antistatic agent does not contain organoaluminum compounds such as aluminum alkyls. In a preferred embodiment of the present disclosure, the feed line for introducing the combined feed stream comprising liquid hydrocarbon and antistatic agent into the gas-phase polymerization reactor is equipped with a static mixer and the combined feed stream passes the static mixer before being introducing into the gas-phase polymerization reactor.

The process of the present disclosure allows the preparation of all types of common polyolefin polymers. Preferably the prepared polyolefin polymers are broad molecular weight polyolefin polymers and the broad molecular weight polyolefin polymers are preferably multimodal polyolefin polymers whereby the term multimodal refers to the modality of the molecular weight distribution. As frequently used in the art, and also used herein, multimodal shall include bimodal. Such polymers can be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal polyolefin polymers.

In a preferred embodiment of the present disclosure, the polymerization is carried out in a cascade of a fluidized-bed reactor and a multizone circulating reactor and the polymerization reactors are operated with different polymerization conditions and especially with different concentrations of molecular weight regulator such as hydrogen. Accordingly, a lower molecular weight polyolefin polymer component is obtained in the polymerization with the lower hydrogen concentration reactor and a higher molecular weight polyolefin polymer component is obtained in the polymerization with the lower hydrogen concentration reactor. Preferably, a lower molecular weight polyolefin polymer component is obtained in the fluidized-bed reactor and a higher molecular weight polyolefin polymer component is obtained in the multizone circulating reactor. Thus, the fluidized-bed reactor is preferably operated with a higher concentration of hydrogen producing a lower molecular weight polyolefin polymer component and the multizone circulating reactor is preferably operated with a lower concentration of hydrogen producing a higher molecular weight polyolefin polymer component.

Preferred polyolefin polymers prepared in the process of the present disclosure are polyethylenes having a MFR_{21.6} according to DIN EN ISO 1133:2005 at a temperature of 190 °C under a load of 21.6 kg in the range of from 0.5 g/10 min to 350 g/10 min, more preferably either in the range of from 1.0 g/10 min to 40 g/10 min or from 120 g/10 min to 250 g/10 min and especially preferred are polyethylenes having a MFR_{21.6} in the range of from 1.2 g/10 min to 35 g/10 min and in particular of from 1.5 g/10 min to 10 g/10 min. Preferably the density is in the range of from 0.935 g/cm³ to 0.970 g/cm³ and more preferably in the range of from 0.945 g/cm³ to 0.968 g/cm³.

The process of the present disclosure is especially preferred for preparing polyethylenes in a polymerization reactor cascade, in which a fluidized-bed reactor is arranged upstream of a multizone circulating reactor, and where an ethylene homopolymer or ethylene copolymer, which has a MFR_{21.6} according to DIN EN ISO 1133:2005 at a temperature of 190 °C under a load of 2.16 kg in the range of from 0.1 g/10 min to 300 g/10 min and more preferably of from 1 g/10 min to 100 g/10 min, is produced in the fluidized-bed reactor.

The process of the present disclosure provides a possibility for preparing a polyolefin polymer by gas-phase polymerization in a polymerization reactor cascade comprising a fluidized-bed reactor and a multizone circulating reactor, in which the formation of polymer agglomerates in the polymerization reactors and fluctuations in the fluid-dynamics of the multizone circulating reactor are prevented or at least significantly reduced.

The process of the present disclosure results in a substantial reduction of the level of electrostatic charges observed in the multizone circulating reactor. Because of the reduced electrostatics, the tendency of the polyolefin polymer particles to stick to the reactor walls is reduced. This does not only reduces the risk of forming chunks or wall sheeting, which mostly leads to an unavoidable shut-down of the polymerization reactor because of plugging the discharge line, but also improves the fluid-dynamics of the multizone circulating reactor and avoids their fluctuations.

If, for example, polymer particles have a tendency to adhere to the walls of the riser of the multizone circulating reactor and coverage of the riser wall is continuously build-up, the polymer particle layer or a part of the layer can drop at a certain time. As a result, the amount of transportable polymer particles in the riser increases immediately, more polymer is transported to the downcomer and the polymer particle level within the downcomer rises very fast. By the increase of the number of polymer particles within the riser however not only the density of the reactor content in the riser changes temporarily but also the fluid-dynamics of the reaction mixture fluctuate. Moreover, the variation of the polymer particle level within the downcomer also influences the fluid-dynamics within the whole multizone circulating reactor.

The level of electrostatic charges observed in the multizone circulating reactor is especially sensitive to the molecular weight of the polyolefin polymer particles transferred into it. The lower their melt index is the higher are the electrostatic charges in the second reactor. Especially if polyethylene particles having a MFR_{21.6} at a temperature of 190 °C under a load of 2.16 kg of less than 60 g/10 min are introduced into the multizone circulating reactor, the process of the present disclosure provides significant advantages.

Using the antistatic agent of the present disclosure does not only result in a process for the polymerization of olefins in the presence of an antistatic agent which is simple to carry out but also the polymerization process has a good operability. That means, as well the tendency for forming polymer deposits on the rector wall, i.e. reactor fouling, and for forming lumps as the tendency for forming fines, i.e. for forming very small polyolefin particles, is reduced. Moreover; the activity of the catalyst is improved or at least not impaired and the product properties of the prepared polyolefins are not deteriorated. Furthermore, using the antistatic agent of the present invention does not require adding not food-contact approved substances to the polymerization.

### EXAMPLES

The density was determined according to DIN EN ISO 1183-1:2004, Method A (Immersion) with compression molded plaques of 2 mm thickness. The compression molded plaques were prepared with a defined thermal history: Pressed at 180 °C, 20MPa for 8 min with subsequent crystallization in boiling water for 30 min.

The melt flow rate MFR_{21.6} was determined according to DIN EN ISO 1133:2005, condition D at a temperature of 190°C under a load of 2.16 kg.

The melt flow rate MFR₅ was determined according to DIN EN ISO 1133:2005, condition T at a temperature of 190 °C under a load of 5 kg.

The melt flow rate MFR_{21.6} was determined according to DIN EN ISO 1133:2005, condition G at a temperature of 190 °C under a load of 21.6 kg.

The Flow Rate Ratio FRR is the ratio of MFR_{21.6} / MFR₅.

The electrostatic charges present in the second polymerization reactor of the polymerization reactor cascade were measured by a sensor (Correstat 3410; Progression, Inc., Haverhill, MA, USA), which monitors charge activity and polarity within the reactor. The sensor has a measurement range from +/- 0.1 to 10 nA full scale. For the evaluation of the electrostatic charges inside the reactor, the difference between measured negative and positive charges was chosen. The maximum difference is 20 nA and is defined as 100 % scale whereas no variation in the electrostatic charge is referred to as 0 % scale.

The operability of the second polymerization reactor was classified according to five categories. An indication of the operability for specific polymerization conditions is, for example, given by density measurements in the multizone circulating reactor. If polymer particles continuously adhere to the walls of the riser, the coverage of the wall increases until the whole layer or a part of the layer drops at a certain time. As a result, the density of the rector content in the riser increases, a higher polymer mass stream is transported to the downcomer and the polymer particle level within the downcomer increases very fast. The more pronounced these effects are and the more often the effects occur the worse is the operability. Such sticking and dropping phenomena can also be observed in the transportation lines of the multizone circulating reactor or at other positions. If a layer of sticking polymer particles is e.g. build-up upon a probe for density measurement, the coverage and its thickness influence the out-put of the density measurement device. Thus, by monitoring the results of the density measurements at different positions of the polymerization reactor, for example at the bottom and at the top of the riser and at the entrance of the downcomer and further observing the polymer particle level within the downcomer and observing the fluctuations of these measurements it is possible to assess the operability of the second polymerization reactor.

Based on experience and continuous observation of the reactor conditions, the operability was classified according to the five following categories:
- Very bad operability: Very unstable reactor behavior, which usually leads to an unavoidable shut-down within a period of 2 hours.
- Bad operability: Unstable reactor behavior, which usually leads to an unavoidable shut-down within a period of 12 hours.
- Moderate operability: Still instable reactor behavior but usually without the need of a shut-down.
- Good operability: Stable reactor behavior with only minor fluctuations.
- Very good operability: Stable reactor behavior without fluctuations.

The productivity is the amount of obtained polymer per amount of catalyst fed to the polymerization.

### Comparative Example A

A polyethylene was prepared in a cascade of a fluidized-bed reactor and a multizone circulating reactor having two interconnected reaction zones as shown in Figure 1.

For carrying out the polymerization, 7 g/h of a Ziegler-Natta catalyst, which was prepared according to example 13 of WO 2004/106388 A2 with a molar feed ratio of electron donor/Ti of 8, were fed using 5 kg/h of liquid propane to a first stirred precontacting vessel, into which also triethylaluminum (TEA) and tetrahydrofuran (THF) were dosed. The weight ratio of triethylaluminum to the Ziegler catalyst was 6:1. The weight ratio of TEA to THF was 44. The first precontacting vessel was kept at 50 °C with an average residence time of 10 minutes. The catalyst suspension of the first precontacting vessel was continuously transferred to a second stirred precontacting vessel, which was operated with an average residence time of 60 minutes and kept also at 50 °C. The catalyst suspension was then transferred continuously to fluidized-bed reactor (FBR) (1) via line (10).

In fluidized-bed reactor (1), ethylene was polymerized in the presence of propane as inert diluent using hydrogen as molecular weight regulator. 40 kg/h of ethylene and 95 g/h of hydrogen were fed to fluidized-bed reactor (1) via line (9). No comonomer was added. The polymerization was carried out at a temperature of 80 °C and a pressure of 2.9 MPa. The selected feed rates resulted in an ethylene concentration in the reactor of 10 vol.-% and a molar ratio of hydrogen/ethylene in the reactor of 1.5. Furthermore, 80 ppm of Atmer 163 (synthetic ethoxylated amine of Croda GmbH, Nettetal, Germany) were fed as antistatic agent to the first reactor via a further line (9) into recycle line (5), employing a feed stream of liquid propane. The amount of added antistatic agents was calculated as weight ratio of the weight of added antistatic agent to the weight of ethylene fed to the first reactor.

The polyethylene obtained in fluidized-bed reactor (1) had a MFR_{2.16} of 20 g/10 min and a density of 0.966 g/cm3.

The polyethylene obtained in fluidized-bed reactor (1) was continuously transferred to multizone circulating reactor (MZCR) (31) which was operated at a pressure of 2.5 MPa and a temperature of 78 °C measured at the gas exit from reactor (31). 14 kg/h of ethylene and 0.95 kg/h of 1-hexene were introduced into downcomer (33) via lines (46) and 5 kg/h of propane, 28.5 kg/h of ethylene and 7.6 g/h of hydrogen were fed into the recycling line (39) via line (45). The selected polymerization conditions resulted in a molar ratio of hydrogen/ethylene in line (43) of 0.2. In order to broaden the molecular weight distribution of the final ethylene polymer, the multizone circulating reactor (31) was operated by establishing different conditions of monomers and hydrogen concentration within riser (32) and the downcomer (33). This was achieved by feeding 330 kg/h of a liquid stream of partially condensed recycle gas via line (52) into the upper part of the downcomer (33). Heat exchanger (49) was operated at 52°C and 2.5 MPa. Furthermore, 90 ppm of Atmer 163 and 20 ppm of Cithrol GMS 40-PW-(GD) (glycerol monostearate of Croda GmbH, Nettetal, Germany) were fed to the riser (32) of the multizone circulating reactor (31) via line (47), employing a feed stream of liquid propane. The amounts of antistatic agents added to the second reactor were calculated as weight ratio of the weight of added antistatic agent to the sum of the weight of ethylene fed to the first reactor and the weight of the ethylene fed to the second reactor.

The split, i.e. the portion produced in the first reactor of the total amount of the final polyethylene polymer produced in both the first and the second polymerization reactor, was 49% by weight. The obtained polyethylene polymer had a final MFR_{21.6} of 7 g/10 min and a relatively broad molecular weight distribution with a FRR of 20. The obtained density was 0.950 g/cm³.

The results of the measured electrostatic charges and the observed operability are shown in Table 1.

### Comparative Example B

In the cascade of a fluidized-bed reactor and a multizone circulating reactor used in Comparative Example A, a polyethylene grade differing in the composition from that of Comparative Example A was prepared, whereby the polyethylene obtained in the first polymerization reactor had a lower melt flow rate that the polyethylene obtained in the first polymerization reactor of Comparative Example A.

For carrying out the polymerization, 8 g/h of a Ziegler-Natta catalyst, which was prepared according to example 13 of WO 2004/106388 A2 with a molar feed ratio of electron donor/Ti of 8, were fed using 5 kg/h of liquid propane to a first stirred precontacting vessel, into which also triethylaluminum (TEA) and tetrahydrofuran (THF) were dosed. The weight ratio of triethylaluminum to the Ziegler catalyst was 6:1. The weight ratio of TEA to THF was 44. The first precontacting vessel was kept at 50 °C with an average residence time of 10 minutes. The catalyst suspension of the first precontacting vessel was continuously transferred to a second stirred precontacting vessel, which was operated with an average residence time of 60 minutes and kept also at 50 °C. The catalyst suspension was then transferred continuously to fluidized-bed reactor (FBR) (1) via line (10).

In fluidized-bed reactor (1), ethylene was polymerized in the presence of propane as inert diluent using hydrogen as molecular weight regulator. 50 kg/h of ethylene and 90 g/h of hydrogen were fed to fluidized-bed reactor (1) via line (9). No comonomer was added. The polymerization was carried out at a temperature of 80 °C and a pressure of 2.9 MPa. The selected feed rates resulted in an ethylene concentration in the reactor of 11 vol.-% and a molar ratio of hydrogen/ethylene in the reactor of 1.1. Furthermore, 80 ppm of Atmer 163 were fed as antistatic agent to the first reactor via a further line (9) into recycle line (5), employing a feed stream of liquid propane. The amount of added antistatic agents was calculated as weight ratio of the weight of added antistatic agent to the weight of ethylene fed to the first reactor.

The polyethylene obtained in fluidized-bed reactor (1) had a MFR_{2.16} of 5 g/10 min and a density of 0.963 g/cm³.

The polyethylene obtained in fluidized-bed reactor (1) was continuously transferred to multizone circulating reactor (MZCR) (31) which was operated at a pressure of 2.5 MPa and a temperature of 78 °C measured at the gas exit from reactor (31). 20 kg/h of ethylene and 0.2 kg/h of 1-hexene were introduced into downcomer (33) via lines (46) and 5 kg/h of propane, 32.8 kg/h of ethylene and 8 g/h of hydrogen were fed into the recycling line (39) via line (45). The selected polymerization conditions resulted in a molar ratio of hydrogen/ethylene in line (43) of 0.25. In order to broaden the molecular weight distribution of the final ethylene polymer, the multizone circulating reactor (31) was operated by establishing different conditions of monomers and hydrogen concentration within riser (32) and the downcomer (33). This was achieved by feeding 330 kg/h of a liquid stream of partially condensed recycle gas via line (52) into the upper part of the downcomer (33). Heat exchanger (49) was operated at 52°C and 2.5 MPa. Furthermore, 90 ppm of Atmer 163 and 20 ppm of Cithrol GMS 40-PW-(GD) were fed to the riser (32) of the multizone circulating reactor (31) via line (47), employing a feed stream of liquid propane. The amounts of antistatic agents added to the second reactor were calculated as weight ratio of the weight of added antistatic agent to the sum of the weight of ethylene fed to the first reactor and the weight of the ethylene fed to the second reactor.

The split, i.e. the portion produced in the first reactor of the total amount of the final polyethylene polymer produced in both the first and the second polymerization reactor, was 49% by weight. The obtained polyethylene polymer had a final MFR_{21.6} of 2.6 g/10 min and a relatively broad molecular weight distribution with a FRR of 26. The obtained density was 0.953 g/cm³.

The results of the measured electrostatic charges and the observed operability are shown in Table 1.

After running the polymerization of Comparative Example B for a period of 3 days, the reactors were opened and the recycle lines (5) and (39) were inspected. Both recycle lines were found to be completely clean.

### Example 1

The polymerization of Comparative Example B was repeated however 100 ppm of Polyglykol PE-K 270 (linear random ethylene oxide/propylene oxide copolymer having a ratio ethylene oxide/propylene oxide of 3:1 and started by a diol of Clariant SE, Frankfurt, Germany) were fed to the first reactor as antistatic agent instead of 80 ppm of Atmer 163. Liquid propane of a flow rate of 5 kg/h was utilized as feed stream for introducing the Polyglykol PE-K 270 into the first reactor. Furthermore, 50 ppm of Polyglykol PE-K 270 were fed to the second reactor as antistatic agent instead of 90 ppm of Atmer 163 and 20 ppm of Cithrol GMS 40-PW-(GD). Liquid propane of a flow rate of 5 kg/h was utilized as feed stream for introducing the Polyglykol PE-K 270 into the second reactor. Moreover, the catalyst feed to the first reactor was reduced to 6.7 g/h in order to have the same ethylene concentration in the fluidized bed reactor as in Comparative Example B.

The obtained polyethylene polymer had a final MFR_{21.6} of 2.6 g/10 min and a relatively broad molecular weight distribution with a FRR of 26. The obtained density was 0.953 g/cm³.

The results of the measured electrostatic charges and the observed operability are shown in Table 1.

After running the polymerization of Example 1 for a period of 3 days, the reactors were opened and the recycle lines (5) and (39) were inspected. Recycle line (39) was found to be completely clean while recycle line (5) was found to be covered with a sticky wall layer comprising PE-K 270 and polyethylene particles.

### Example 2

The polymerization of Example 1 was repeated however antistatic agent Polyglykol PE-K 270 was fed to the polymer bed of the first reactor via line (9a). Liquid propane of a flow rate of 5 kg/h was utilized as feed stream for introducing the Polyglykol PE-K 270 into the first reactor.

The obtained polyethylene polymer had a final MFR_{21.6} of 2.6 g/10 min and a relatively broad molecular weight distribution with a FRR of 26. The obtained density was 0.953 g/cm³.

The results of the measured electrostatic charges and the observed operability are shown in Table 1.

After running the polymerization of Example 2 for a period of 3 days, the reactors were opened and the recycle lines (5) and (39) were inspected. Both recycle lines were found to be completely clean.

**Table 1**

| | Comp. Example A | Comp. Example B | Example 1 | Example 2 |
|---|---|---|---|---|
| (A) First reactor (FBR) | | | | |
| Electrostatics [%] | 95 | 95 | 10 | 10 |
| (B) Second reactor (MZCR) | | | | |
| Electrostatics [%] | 35 | 85 | 20 | 20 |
| Operability | good | moderate | very good | very good |
| Chunks or wall sheeting | no | no | no | no |
| Productivity [g/g] | 11600 | 12500 | 15000 | 15000 |

Comparative Examples A and B present polymerizations of two different polyethylenes, which significantly differ in the melt flow rated MFR_{21.6} of the polyethylene obtained in the first reactor, with identical amounts of added antistatic agent. The comparison shows that the kind of prepared polyolefin strongly influences the electrostatics and the operability of the polymerization reactor.

Replacing Atmer 163 and Atmer 163/glycerol monostearate by an antistatic agent comprising an alkylene oxide derived polymer allows producing a polyethylene grade, which was prepared in Comparative Example B with an instable reactor behavior, with a very good operability. In Examples 1 and 2, the measured electrostatic charges were significantly reduced as well in the fluidized-bed reactor as a in the multizone circulating reactor compared to Comparative Example B and the polymerization reactors showed a stable reactor behavior without fluctuations. Furthermore, the change of antistatic agent from Comparative Example B to Examples 1 and 2 resulted in an increase of the catalyst productivity by about 20%.

## Claims

1. A process for the preparation of polyolefins by polymerizing olefins at temperatures of from 20 to 200 °C and pressures of from 0.1 to 20 MPa in the presence of a polymerization catalyst in a polymerization reactor, wherein the polymerization is carried out in the presence of an antistatic agent comprising an alkylene oxide derived polymer comprising in average from 10 to 200 repeating units -(CH₂-CHR-O)- with R being hydrogen or an alkyl group having from 1 to 6 carbon atoms, wherein the alkylene oxide derived polymer is a random copolymer of ethylene oxide and other alkylene oxides and a ratio n : m of repeating units -(CH₂-CH₂-O)- derived from ethylene oxide to repeating units -(CH₂-CHR'-O)- derived from the other alkylene oxides with R' being an alkyl group having from 1 to 6 carbon atoms is in the range of from 6 : 1 to 1 : 1, and all end groups of the alkylene oxide derived polymer are -OH groups.

2. The process according to claim 1, wherein the ratio n : m is in the range of from 4 : 1 to 2: 1.

3. The process according to claim 1 or 2, wherein the alkylene oxide derived polymer is a linear polymer of general formula (I)
HO-(CH₂-CH₂-O)ₙ-(CH₂-CHR'-O)ₘ-H (I)
wherein R' is a alkyl group having from 1 to 6 carbon atoms and n and m denote the average number of repeating units and n is in a range of from 10 to 180 and m is in a range of from 2 to 120.

4. The process according to any of claims 1 to 3, wherein the alkylene oxide derived polymer is a random copolymer of ethylene oxide and propylene oxide.

5. The process according to claim 4, wherein the ethylene oxide/propylene oxide polymer is a linear ethylene oxide/propylene oxide copolymer of general formula (II)
HO-(CH₂-CH₂-O)ₙ-(CH₂-CH(CH₃)-O)ₘ-H (II)
wherein n is in a range of from 10 to 180 and m is in a range of from 2 to 120.

6. The process according to any of claims 1 to 5, wherein the polymerization is a gas-phase polymerization and the antistatic agent is introduced into the gas-phase polymerization reactor by feeding the antistatic agent to a part of the reactor where the density of solid polymer particles is at least 30 kg/m³.

7. The process according to any of claims 1 to 6, wherein the antistatic agent is introduced into the polymerization reactor by a feed stream of a liquid hydrocarbon and the weight ratio of the antistatic agent to the liquid hydrocarbon in the combined stream introduced into the reactor is in the range from 1 : 5000 to 1 : 10.

8. The process according to any of claims 1 to 7, wherein the polymerization is carried out in a polymerization reactor cascade comprising a fluidized-bed reactor and a multizone circulating reactor, in which multizone circulating reactor the growing polymer flow upward through a first polymerization zone under fast fluidization or transport conditions, leave said first polymerization zone and enter a second polymerization zone through which the particles flow downward under the action of gravity, leave said downcomer and are reintroduced into the riser, thus establishing a circulation of polymer, and the fluidized-bed reactor is arranged upstream of the multizone circulating reactor.

9. The process according to any of claims 1 to 8, wherein a lower molecular weight polyolefin polymer component is obtained in the fluidized-bed reactor and a higher molecular weight polyolefin polymer component is obtained in the multizone circulating reactor.

10. The process according to any of claims 1 to 9, wherein the polyolefin polymer is a multimodal polyolefin polymer.

11. The process according to any of claims 1 to 10, wherein the polyolefin polymer is a polyethylene prepared by homopolymerizing ethylene or copolymerizing ethylene and up to 20 wt.% of C₃-C₈-1-alkenes.

12. The process according to claim 11, wherein the polyethylene has a MFR_{21.6} according to DIN EN ISO 1133:2005 at a temperature of 190 °C under a load of 21.6 kg in the range of from 0.5 g/10 min to 350 g/10 min.

13. The process according to claim 11 or claim 12, wherein the polyethylene has a density in the range of from 0.935 g/cm³ to 0.970 g/cm³.

14. The process according to any of claims 11 to 13, wherein the polyethylene is prepared in a polymerization reactor cascade, in which the fluidized-bed reactor is arranged upstream of the multizone circulating reactor, and an ethylene homopolymer or ethylene copolymer, which has a MFR_{2.16} according to DIN EN ISO 1133:2005 at a temperature of 190°C under a load of 2.16 kg in the range of from 0.1 g/10 min to 300 g/10 min, is produced in the fluidized-bed reactor.

15. The process according to any of claims 1 to 14, wherein the polymerization catalyst is a Ziegler catalyst, a Ziegler-Natta catalyst, a Phillips catalyst, a single-site catalyst or a mixture of catalysts comprising at least one single-site catalyst.

## Patentansprüche

1. Verfahren zur Herstellung von Polyolefinen durch Polymerisieren von Olefinen bei Temperaturen von 20 bis 200 °C und Drücken von 0,1 bis 20 MPa in Gegenwart eines Polymerisationskatalysators in einem Polymerisationsreaktor, wobei die Polymerisation in Gegenwart eines Antistatikums durchgeführt wird, der ein von Alkylenoxid abgeleitetes Polymer umfasst, das durchschnittlich 10 bis 200 sich wiederholende Einheiten -(CH₂-CHR-O)- umfasst, wobei R Wasserstoff oder eine Alkylgruppe mit 1 bis 6 Kohlenstoffatomen ist, wobei das von Alkylenoxid abgeleitete Polymer ein statistisches Copolymer von Ethylenoxid und anderen Alkylenoxiden ist und ein Verhältnis n : m von sich wiederholenden Einheiten -(CH₂-CH₂-O)-, die von Ethylenoxid abgeleitet sind, zu sich wiederholenden Einheiten - (CH₂-CHR'-O)-, die von den anderen Alkylenoxiden abgeleitet sind, wobei R' eine Alkylgruppe mit 1 bis 6 Kohlenstoffatomen ist, im Bereich von 6 : 1 bis 1: 1 hat, und wobei alle Endgruppen des von Alkylenoxid abgeleiteten Polymers -OH Gruppen sind.

2. Verfahren nach Anspruch 1, wobei das Verhältnis n : m im Bereich von 4 : 1 bis 2 : 1 liegt.

3. Verfahren nach Anspruch 1 oder 2, wobei das von Alkylenoxid abgeleitete Polymer ein lineares Polymer mit der allgemeinen Formel (I) ist:
HO-(CH₂-CH₂-O)ₙ-(CH₂-CHR'-O)ₘ-H (I)
wobei R' eine Alkylgruppe mit 1 bis 6 Kohlenstoffatomen ist, und n und m die durchschnittliche Anzahl sich wiederholender Einheiten angeben, und n in einem Bereich von 10 bis 180 liegt, und m in einem Bereich von 2 bis 120 liegt.

4. Verfahren nach einem der Ansprüche 1 bis 3, wobei das von Alkylenoxid abgeleitete Polymer ein statistisches Polymer von Ethylenoxid und Propylenoxid ist.

5. Verfahren nach Anspruch 4, wobei das Ethylenoxid/Propylenoxid-Polymer ein lineares Ethylenoxid/Propylenoxid-Copolymer mit der allgemeinen Formel (II) ist:
HO-(CH₂-CH₂-O)ₙ-(CH₂-CH(CH₃)-O)ₘ-H (II)
wobei n in einem Bereich von 10 bis 180 liegt und m in einem Bereich von 2 bis 120 liegt.

6. Verfahren nach einem der Ansprüche 1 bis 5, wobei die Polymerisation eine Gasphasenpolymerisation ist und das Antistatikum in den Gasphasenpolymerisationsreaktor eingebracht wird, indem das Antistatikum in einen Teil des Reaktors eingespeist wird, in dem die Dichte der festen Polymerpartikel mindestens 30 kg/m³ beträgt.

7. Verfahren nach einem der Ansprüche 1 bis 6, wobei das Antistatikum durch einen Zustrom eines flüssigen Kohlenwasserstoffs in den Polymerisationsreaktor eingebracht wird und das Gewichtsverhältnis des Antistatikums zu dem flüssigen Kohlenwasserstoff in dem kombinierten Strom, der in den Reaktor eingebracht wird, im Bereich von 1 : 5000 bis 1 : 10 liegt.

8. Verfahren nach einem der Ansprüche 1 bis 7, wobei die Polymerisation in einer Polymerisationsreaktorkaskade durchgeführt wird, die einen Wirbelschichtreaktor und einen mehrzonigen Umlaufreaktor umfasst, wobei das wachsende Polymer in dem mehrzonigen Umlaufreaktor durch eine erste Polymerisationszone hindurch unter raschen Fluidisierungs- oder Transportbedingungen aufwärts fließt, die erste Polymerisationszone verlässt und in eine zweite Polymerisationszone eintritt, durch die die Partikel unter Wirkung der Schwerkraft abwärts fließen, das Fallrohr verlassen und erneut in das Steigrohr eingebracht werden, wodurch ein Kreislauf des Polymers erzeugt wird, und wobei der Wirbelschichtreaktor dem mehrzonigen Umlaufreaktor vorgeschaltet ist.

9. Verfahren nach einem der Ansprüche 1 bis 8, wobei in dem Wirbelschichtreaktor eine Polyolefinpolymerkomponente mit niedrigerem Molekulargewicht erhalten wird und in dem mehrzonigen Umlaufreaktor eine Polyolefinpolymerkomponente mit höherem Molekulargewicht erhalten wird.

10. Verfahren nach einem der Ansprüche 1 bis 9, wobei es sich bei dem Polyolefinpolymer um ein multimodales Polyolefinpolymer handelt.

11. Verfahren nach einem der Ansprüche 1 bis 10, wobei das Polyolefinpolymer ein Polyethylen ist, das durch Homopolymerisation von Ethylen oder Copolymerisation von Ethylen und bis zu 20 Gew.% C₃-C₈-1-Alkenen hergestellt wird.

12. Verfahren nach Anspruch 11, wobei das Polyethylen einen gemäß DIN EN ISO 1133:2005 bei einer Temperatur von 190 °C unter einer Last von 21,6 kg bestimmten MFR_{21,6} im Bereich von 0,5 g/10 min bis 350 g/10 min aufweist.

13. Verfahren nach Anspruch 11 oder Anspruch 12, wobei das Polyethylen eine Dichte im Bereich von 0,935 g/cm³ bis 0,970 g/cm³ hat.

14. Verfahren nach einem der Ansprüche 11 bis 13, wobei das Polyethylen in einer Polymerisationsreaktorkaskade hergestellt wird, in der der Wirbelschichtreaktor dem mehrzonigen Umlaufreaktor vorgeschaltet ist, und in dem Wirbelschichtreaktor ein Ethylenhomopolymer oder Ethylencopolymer produziert wird, welches eine MFR_{2,16} gemäß DIN EN ISO 1133:2005 bei einer Temperatur von 190 °C unter einer Last von 2,16 kg im Bereich von 0,1 g/10 min bis 300 g/10 min aufweist.

15. Verfahren nach einem der Ansprüche 1 bis 14, wobei der Polymerisationskatalysator ein Ziegler-Katalysator, ein Ziegler-Natta-Katalysator, ein Phillips-Katalysator, ein Single-Site-Katalysator oder eine Mischung von Katalysatoren ist, die mindestens einen Single-Site-Katalysator umfasst.

## Revendications

1. Procédé pour la préparation de polyoléfines par polymérisation d'oléfines à des températures allant de 20 à 200 °C et des pressions allant de 0,1 à 20 MPa en présence d'un catalyseur de polymérisation dans un réacteur de polymérisation, la polymérisation étant réalisée en présence d'un agent antistatique comprenant un polymère dérivé d'oxyde d'alkylène comprenant en moyenne de 10 à 200 unités de répétition -(CH₂-CHR-O)-, R représentant hydrogène ou un groupe alkyle ayant de 1 à 6 atomes de carbone, le polymère dérivé d'oxyde d'alkylène étant un copolymère aléatoire d'oxyde d'éthylène et d'autres oxydes d'alkylène et un rapport n : m des unités de répétition -(CH₂-CH₂-O)- dérivées de l'oxyde d'éthylène aux unités de répétition -(CH₂-CHR'-O)- dérivées des autres oxydes d'alkylène, R' représentant un groupe alkyle ayant de 1 à 6 atomes de carbone, étant situé dans la plage allant de 6 : 1 à 1 : 1, et tous les groupes terminaux du polymère dérivé d'oxyde d'alkylène étant des groupes -OH.

2. Procédé selon la revendication 1, dans lequel le rapport n : m se situe dans la plage allant de 4 : 1 à 2 : 1.

3. Procédé selon la revendication 1 ou 2, dans lequel le polymère dérivé d'oxyde d'alkylène est un polymère linéaire de formule générale (I)
HO-(CH₂-CH₂-O)ₙ-(CH₂-CHR'-O)ₘ-H (I)
dans laquelle R' représente un groupe alkyle ayant de 1 à 6 atomes de carbone et n et m désignent le nombre moyen d'unités de répétition et n se situe dans une plage allant de 10 à 180 et m se situe dans une plage allant de 2 à 120.

4. Procédé selon l'une quelconque des revendications 1 à 3, dans lequel le polymère dérivé d'oxyde d'alkylène est un copolymère aléatoire d'oxyde d'éthylène et d'oxyde de propylène.

5. Procédé selon la revendication 4, dans lequel le polymère d'oxyde d'éthylène/oxyde de propylène est un copolymère d'oxyde d'éthylène/oxyde de propylène linéaire de formule générale (II)
HO-(CH₂-CH₂-O)ₙ-(CH₂-CH(CH₃)-O)ₘ-H (II)
dans laquelle n se situe dans une plage allant de 10 à 180 et m se situe dans une plage allant de 2 à 120.

6. Procédé selon l'une quelconque des revendications 1 à 5, dans lequel la polymérisation est une polymérisation en phase gazeuse et l'agent antistatique est introduit dans le réacteur de polymérisation en phase gazeuse par introduction de l'agent antistatique dans une partie du réacteur où la masse volumique de particules de polymère solides est d'au moins 30 kg/m³.

7. Procédé selon l'une quelconque des revendications 1 à 6, dans lequel l'agent antistatique est introduit dans le réacteur de polymérisation par un courant d'alimentation d'un hydrocarbure liquide et le rapport en poids de l'agent antistatique à l'hydrocarbure liquide dans le courant combiné introduit dans le réacteur se situe dans la plage allant de 1 : 5 000 à 1 : 10.

8. Procédé selon l'une quelconque des revendications 1 à 7, dans lequel la polymérisation est réalisée dans une cascade de réacteurs de polymérisation comprenant un réacteur à lit fluidisé et un réacteur à circulation multizone, réacteur à circulation multizone dans lequel le polymère en croissance s'écoule vers le haut à travers une première zone de polymérisation dans des conditions de fluidisation rapide ou de transport, quitte ladite première zone de polymérisation et entre dans une seconde zone de polymérisation à travers laquelle les particules s'écoulent vers le bas sous l'action de la gravité, quittent ledit déversoir et sont réintroduites dans la colonne montante, établissant ainsi une circulation de polymère, et le réacteur à lit fluidisé est disposé en amont du réacteur à circulation multizone.

9. Procédé selon l'une quelconque des revendications 1 à 8, dans lequel un composant polymère de polyoléfine de poids moléculaire inférieur est obtenu dans le réacteur à lit fluidisé et un composant polymère de polyoléfine de poids moléculaire supérieur est obtenu dans le réacteur à circulation multizone.

10. Procédé selon l'une quelconque des revendications 1 à 9, dans lequel le polymère de polyoléfine est un polymère de polyoléfine multimodal.

11. Procédé selon l'une quelconque des revendications 1 à 10, dans lequel le polymère de polyoléfine est un polyéthylène préparé par homopolymérisation d'éthylène ou copolymérisation d'éthylène et jusqu'à 20 % en poids de 1-alcènes en C₃-C₈.

12. Procédé selon la revendication 11, dans lequel le polyéthylène a un MFR_{21,6} selon DIN EN ISO 1133:2005 à une température de 190 °C sous une charge de 21,6 kg dans la plage allant de 0,5 g/10 min à 350 g/10 min.

13. Procédé selon la revendication 11 ou la revendication 12, dans lequel le polyéthylène a une masse volumique dans la plage allant de 0,935 g/cm³ à 0,970 g/cm³.

14. Procédé selon l'une quelconque des revendications 11 à 13, dans lequel le polyéthylène est préparé dans une cascade de réacteurs de polymérisation, dans laquelle le réacteur à lit fluidisé est disposé en amont du réacteur à circulation multizone, et un homopolymère d'éthylène ou un copolymère d'éthylène, qui a un MFR_{2,16} selon DIN EN ISO 1133:2005 à une température de 190 °C sous une charge de 2,16 kg dans la plage allant de 0,1 g/10 min à 300 g/10 min, est produit dans le réacteur à lit fluidisé.

15. Procédé selon l'une quelconque des revendications 1 à 14, dans lequel le catalyseur de polymérisation est un catalyseur de Ziegler, un catalyseur de Ziegler-Natta, un catalyseur Phillips, un catalyseur monosite ou un mélange de catalyseurs comprenant au moins un catalyseur monosite.
